## Europäisches Patentamt
## European Patent Office
## Office européen des brevets

(11) Numéro de publication: **0 072 305**
**B1**

## (12) FASCICULE DE BREVET EUROPÉEN

(45) Date de publication du fascicule du brevet:
14.01.87

(51) Int. Cl.⁴: **F 24 J 3/00,** F 01 K 25/10, F 03 G 7/00

(21) Numéro de dépôt: **82401441.9**

(22) Date de dépôt: **30.07.82**

(54) **Procédé de stockage sous forme chimique d'une énergie mécanique ou thermique et de récupération sous forme mécanique d'une partie au moins de ladite énergie stockée et dispositif pour la mise en oeuvre de ce procédé.**

(30) Priorité: **06.08.81 FR 8115263**

(43) Date de publication de la demande:
**16.02.83 Bulletin 83/7**

(45) Mention de la délivrance du brevet:
**14.01.87 Bulletin 87/3**

(84) Etats contractants désignés:
**BE DE GB LU NL SE**

(56) Documents cité:
**DE-A-2 810 360**
**DE-A-2 923 480**
**DE-C-503 537**
**FR-A-701 565**
**FR-A-2 321 668**
**FR-A-2 398 178**
**FR-A-2 457 451**
**FR-A-2 488 379**
**US-A-4 009 575**

(73) Titulaire: **Etablissement Public dit: CENTRE NATIONAL DE LA RECHERCHE SCIENTIFIQUE (CNRS), 15, Quai Anatole France, F-75700 Paris (FR)**

(72) Inventeur: **Le Goff, Pierre Lab.des Sciences du Génie Chim., bâtiment ENSIC 1, rue Grandville, F-54042 Nancy Cedex (FR)**

(74) Mandataire: **Lerner, François, 5, rue Jules Lefebvre, F-75009 Paris (FR)**

EP 0 072 305 B1

LIBER, STOCKHOLM 1987

## Description

La présente invention a pour objet un procédé de stockage sous forme chimique d'une énergie mécanique ou thermique et de récupération sous forme mécanique d'une partie au moins de ladite énergie stockée. L'invention se rapporte également à des dispositifs permettant la mise en oeuvre d'un tel procédé.

Il n'existe dans la pratique aucune machine permettant de stocker sous forme chimique une énergie mécanique ou thermique et de la récupérer au moment voulu sous forme mécanique.

Les accumulateurs électriques constituent effectivement un moyen de stockage chimique d'une énergie habituellement délivrée sous forme électrique et récupérable sous forme électrique également. Les inconvénients des batteries électriques sont essentiellement de deux sortes: le prix et le poids de ces appareils sont prohibitifs pour les grandes puissances, tandis que d'autre part, le rendement de récupération de l'énergie électrique stockée est relativement faible et en pratique inférieure à 58 %.

Le procédé de l'invention permet par la mise en oeuvre de dispositifs simples de stocker de l'énergie mécanique ou thermique sous forme chimique, et de la récupérer au moment désiré, et ce avec des rendements pouvant atteindre et éventuellement dépasser 80 %.

La théorie enseigne qu'il est possible de procéder au stockage sous forme chimique d'une énergie mécanique ou thermique et de récupérer sous forme mécanique une partie au moins de ladite énergie stockée, en utilisant l'énergie mécanique ou thermique à stocker pour constituer ou régénérer à partir de diluats de solutions réactives fortement non idéales d'un mélange binaire solvant/concentrat, ledit solvant et le dit concentrat, et lorsqu'on veut récupérer ladite énergie, de faire travailler dans un moteur à vapeur tel que machine à piston, à vis, à engrenage ou turbine, la vapeur du solvant qui s'y mélange, avec le concentrat pour former le diluat. Cependant, la pratique n'enseigne aucun dispositif permettant une mise en oeuvre effective du procédé, laquelle se heurte à des complications d'appareillage trop importantes et à des rendements d'utilisation heaucoup trop faibles.

Il est également connu du document DE-A-2 810 360 de stocker de l'énergie mécanique sous forme chimique en formant par déshydratation sous vide à partir d'un composé solide hydraté (en l'espèce $CaCl_2$-$6H_2O$) un nouveau composé solide déshydraté ($CaCl_2$-$H_2O$) lequel sous l'effet d'une réhydratation exothermique libèrera de la chaleur à bas niveau.

Le même document enseigne que la déshydratation peut être obtenue par chauffage du composé solide hydraté.

Dans aucun cas l'énergie n'est récupérée sous forme mécanique.

Le document FR-A-2 457 451 enseigne un principe analogue pouvant utiliser des solutions telles que bromure de lithium/eau et acide sulfurique/eau. L'énergie est récupérée sous forme thermique au moment de la dilution et au sein de la chambre de dilution.

Le document U S-A-4 009 575 enseigne la transformation sous forme chimique d'une énergie thermique à haut niveau et sa récupération sous forme thermique à bas niveau et accessoirement mécanique et frigorifique en utilisant une solution telle que carbonate de potassium décomposable à la chaleur en gaz carbonique, vapeur d'eau et bicarbonate de potassium, et fournissant lors de sa régénération dans un régénérateur de la chaleur à bas niveau.

Dans tous ces documents, l'évaporateur dans lequel le produit ou la solution est décomposée, et le régénérateur dans lequel le produit ou la solution est régénéré sont distincts et n'ont en particulier aucun echange thermique direct.

Le procédé de stockage sous forme chimique d'une énergie mécanique ou thermique et de récupération sous forme mécanique d'une partie au moins de ladite énergie stockée, dans lequel on utilise l'énergie mécanique ou thermique à stocker pour constituer ou régénérer à partir de diluats de solutions réactives fortement non idéales d'un mélange binaire solvant/concentrat, ledit solvant et ledit concentrat et dans lequel, lorsqu'on veut récupérer ensuite ladite énergie, on fait travailler dans un moteur à vapeur tel que machine à piston, à vis, à engrenage ou turbine, la vapeur du solvant qui s'y mélange, avec le concentrat pour former le diluat, se caractérise selon l'invention en ce qu'on conduit la réaction de récupération de l'énergie mécanique en mettant en contact thermique direct à travers une simple paroi de séparation le débit de solvant qui se vaporise à une pression donnée avec le débit de concentrat qui se dilue à une pression inférieure à ladite pression donnée.

Avantageusement, on effectue ces opérations de façon sensiblement isotherme, par exemple à la température ambiante, ce qui résoud radicalement les éventuels problèmes de pertes thermiques.

Avantageusement également, on travaille de façon sensiblement adiabatique, de sorte que la mise en oeuvre du procédé de l'invention peut se faire indépendamment de tout apport de chaleur extérieure onéreuse.

Le couple de constituants solvant/soluté est choisi de manière à former une solution réactive, fortement non-idéale, présentant la double propriété suivante:

- la volatilité du soluté est négligeable en comparaison de celle du solvant;
- la présence de soluté dans la solution abaisse la pression de vapeur du solvant beaucoup plus fortement que ne le prévoirait la loi classique des solutions idéales.

Comme exemple de telles solutions réactives fortement non-idéales, on peut citer notamment le mélange ammoniac ($NH_3$) qui constitue le "solvant" et l'eau ($H_2O$) qui constitue le "soluté".

D'autres mélanges peuvent être cités tels par exemple que le mélange ammoniac (NH₃)/thiocyanate de sodium (NaSCN) ou encore le mélange ammoniac (NH₃.)/bromure de lithium.

D'autres solvants que l'ammoniac peuvent également convenir, notamment la méthylamine (CH₃NH₂), le méthanol (CH₃OH), l'éthanol (C₂H₅OH), l'eau (H₂O).

Pour chaque solvant, divers solutés appropriés pourront être choisis, mais dans chaque cas, les plus performants sont généralement les sels de lithium (bromure, chlorure et chlorate).

Pour la mise en oeuvre pratique du procédé de l'invention, on utilise avantageusement un dispositif comportant au moins une alimentation en solvant débouchant dans une chambre d'évaporation, au moins une alimentation en concentrat débouchant dans une chambre de dilution, au moins une décharge de diluat et au moins un moteur à vapeur relié par son admission à ladite chambre d'évaporation et par son échappement à ladite chambre de dilution, ledit dispositif étant caractérisé en ce que lesdites chambres de dilution et d'évaporation sont disposées en étroit contact thermique l'une avec l'autre, la chambre d'évaporation du solvant comprenant une paroi le long de laquelle lors de ladite réaction de récupération de l'énergie mécanique est amené et s'écoule le solvant, la chambre de dilution du concentrat comprenant une paroi le long de laquelle est amené et s'écoule le concentrat, et lesdites deux parois étant en étroit contact thermique l'une avec l'autre.

On constate qu'effectivement, lorsqu'on opère dans un tel dispositif, celui-ci fonctionne dans des conditions thermodynamiques proches des conditions idéales permettant d'atteindre des rendements de récupération de l'énergie stockée dépassant 80 %. Il est remarquable de noter en passant qu'il s'agit d'une conversion directe d'énergie mécanique en énergie chimique, sans passage intermédiaire par l'énergie thermique. Le concept de "rendement limite de Carnot" ne s'applique donc pas à ces machines.

De façon pratique, la chambre d'évaporation du solvant comprend une paroi le long de laquelle est amené et s'écoule le solvant, la chambre de dilution du concentrat comprend une paroi le long de laquelle est amené et s'écoule le concentrat, et lesdites deux parois sont en étroit contact thermique l'une avec l'autre, ce qui peut être obtenu le plus simplement et le plus efficacement en faisant en sorte que les deux faces opposées d'une seule et même paroi matérielle constituent lesdites deux parois sur lesquelles s'écoulent respectivement le solvant et le concentrat.

Lorsqu'on veut accroître la puissance de l'installation tout en la réalisant de manière compacte, on dispose avantageusement plusieurs chambres empilées les unes contre les autres formant alternativement chambre d'évaporation du solvant et chambre de dilution du concentrat.

L'invention et sa mise en oeuvre apparaîtront plus clairement à l'aide de la description qui va suivre, faite en référence aux dessins annexés dans lesquels:
- les figures 1 et 2 illustrent le principe connu de mise en équilibre d'un solvant et d'un concentrat d'un mélange binaire fortement non-idéal qui échangent leur vapeur à des pressions différentes;
- la figure 3 illustre schématiquement la réalisation d'un dispositif de base permettant la mise en oeuvre de l'invention et la récupération sous forme mécanique d'une énergie stockée sous forme chimique;
- la figure 4 montre une variante de la réalisation de la figure 3 comportant plusieurs dispositifs accolés fonctionnant en parallèle;
- la figure 5 montre le même dispositif que la figure 4 mais dans lequel les circulations ont été inversées pour effectuer le stockage sous forme chimique d'une énergie mécanique.

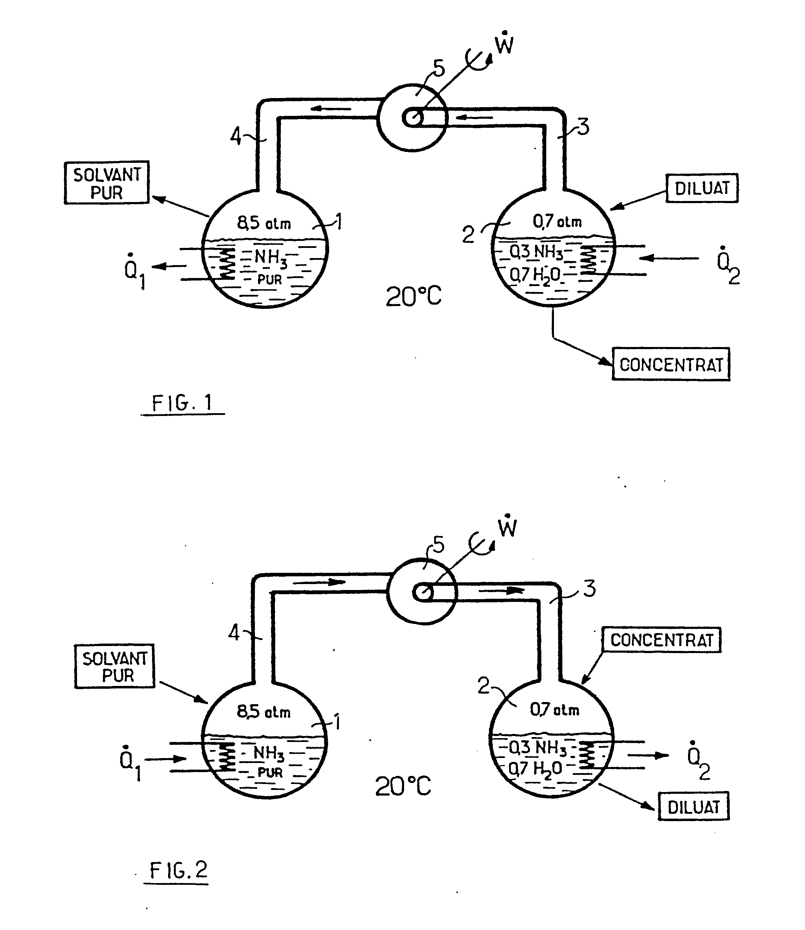

On se reportera tout d'abord aux figures 1 et 2 qui illustrent un principe de physique connu mais n'ayant pas à ce jour reçu d'application pratique.

Dans un ballon fermé 1 est contenu sous pression de 8,5 atmosphères de l'ammoniac pur (NH₃). On rappelle que 1 atmosphère = 1,8133 bar.

Dans un second ballon 2 est maintenu sous pression de 0,7 atmosphères un mélange de 30 % d'ammoniac (NH₃) et de 70 % d'eau (H₂O). Dans de telles conditions, les courbes de pression de vapeur montrent que ces composés sont stables à la température de 20°C. D'autre part, dans de telles conditions, la composition de la vapeur présente dans le ballon 2 au-dessus du diluat constitué de 70 % d'eau et de 30 % d'ammoniac est sensiblement de l'ammoniac pur (98,6 % d'ammoniac).

Si l'on relie les deux ballons par des conduites 3, 4 et un compresseur 5, il est donc possible de faire passer de l'ammoniac pratiquement pur du ballon 2 dans le ballon 1. En d'autres termes, à partir du diluat (solution à faible teneur en eau), on préparera un concentrat (solution à forte teneur en eau). L'énergie mécanique fournie par le compresseur 5 sera stockée sous forme chimique, c'est-à-dire sous forme d'ammoniac pur, dans le ballon 1. La séparation nécessite en outre un apport de chaleur $Q_2$ au ballon 2 et un refroidissement d'une quantité de chaleur $Q_1$ sensiblement plus faible au ballon 1. Par exemple à 20°C:

$Q_1$ = 1288 kJ/kg de NH₃, et $Q_2$ = 1660 kJ/kg.

Inversement, comme illustré à la figure 2, et en supposant par exemple que le compresseur 5 peut fonctionner de façon réversible, on peut laisser évaporer l'ammoniac pur du ballon 1 vers le concentrat contenu dans le ballon 2. Le concentrat va donc s'enrichir en ammoniac, c'est-à-dire en solvant, autrement dit se diluera pour former le diluat.

Là encore, la réaction ne reste équilibrée que si l'on apporte au ballon 1 la chaleur $Q_1$ nécessaire à maintenir la température à 20°C et si l'on refroidit le ballon 2 de façon à maintenir également sa température à la température supposée de 20°C en extrayant la chaleur Q₂.

Toutes les réactions ci-dessus décrites étant parfaitement réversibles, le rendement théorique de l'opération est de 100 % dans les deux cas.

Dans la pratique, le rendement serait celui du compresseur 5. Si on le suppose égal à 90 %, le rendement de la conversion serait donc de 90 % que multiplient 90 % = 81 %.

Une telle installation se heurterait dans la pratique à de graves difficultés de mise en oeuvre compte tenu des apports et des retraits thermiques qu'il faut faire dans chaque ballon, et compte tenu des variations de la composition des diluats et concentrats du ballon 2.

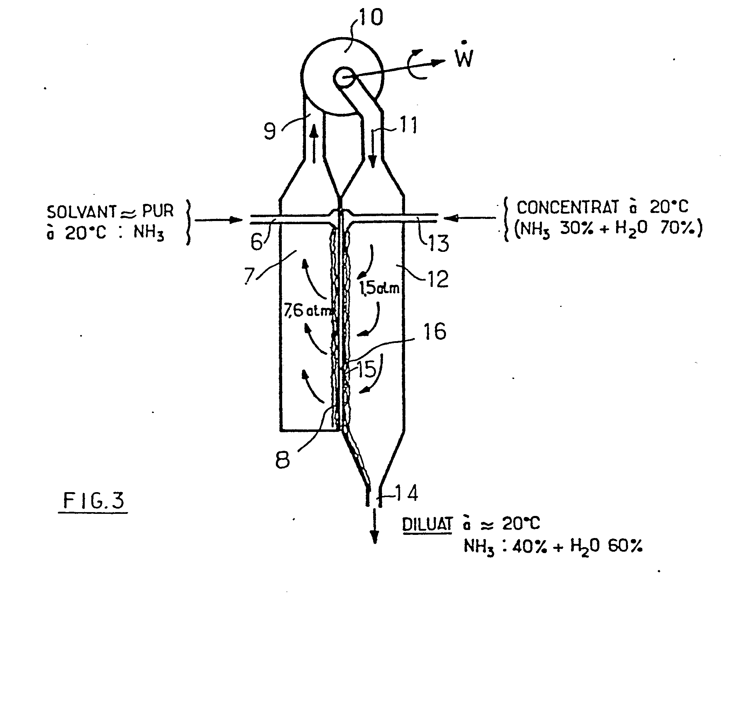

On se reportera maintenant à la figure 3 illustrant une installation conçue selon l'invention, permettant de résoudre ces difficultés.

Conformément à l'invention, le solvant pur de la solution, par exemple de l'ammoniac liquide à 20°C, sous pression d'équilibre de 8,5 atmosphères est amené par un conduit 6 au sommet d'une chambre 7 dans laquelle il est distribué de façon à s'écouler par gravité le long d'une paroi 8 dans la chambre. La chambre 7 peut être constituée par une structure classique d'échangeur plan utilisé dans l'industrie comme concentrateur de solutions, par exemple de saumures salines ou de sucres. La chambre 7 peut également être équivalente à certaines chambres de distillateurs, par exemple d'eau de mer. Des structures appropriées ont par exemple été décrites dans le FR-A- 2 488 379 déposé le 11 août 1980 au nom du même demandeur en vue de constituer des évaporateurs-séparateurs ou des évaporateurs-mélangeurs permettant la revalorisation d'une énergie thermique à bas niveau.

L'ammoniac qui se vaporise dans la chambre 7 est alors admis par un conduit 9 à l'admission d'un moteur 10 tel qu'un moteur à piston, un moteur à vis, un moteur à engrenages ou encore une turbine. La vapeur d'ammoniac sort détendue du moteur 10 par l'échappement 11 et vient se condenser dans une chambre 12 de structure semblable à la chambre 7 et dans laquelle est amenée en tête, par un conduit 13, la solution de concentrat qui formera en bas de la chambre, après absorption de la vapeur d'ammoniac, la solution de diluat évacuée en 14.

En fait, si la détente est effectuée en adiabatique, le fluide se refroidit et sort du moteur à - 37°C et sous forme partiellement condensée, soit à 85 % en vapeur et à 15 % en liquide (brouillard).

Pour éviter la formation de ce brouillard, et maintenir le fluide à 20°C, il faut lui apporter un flux de chaleur de 390 kJ/kg.

Deux variantes peuvent être utilisées pour apporter cette chaleur:

a) Munir le moteur et sa canalisation de sortie 11 d'ailettes afin d'apporter cette chaleur "gratuitement" à partir du milieu environnant et donc maintenir l'appareil globalement isotherme comme nous l'avons supposé plus haut;

b) Laisser le moteur fonctionner adiabatiquement (il faudra toutefois restreindre le choix du moteur à un type qui accepte de fonctionner avec un taux de 15 % de gouttelettes liquides) et placer sur la conduite 11, en sortie du moteur, un échangeur de chaleur pour réchauffer le fluide de - 37°C à + 20°C. On notera que cette dernière solution peut être particulièrement avantageuse, en ce sens qu'elle constitue une "source de froideur" utilisable. Par exemple avec un échangeur à contre-courant, on refroidirait ainsi un fluide frigoporteur auxiliaire de + 20°C à environ - 38°C.

Ainsi, dans l'hypothèse maximale d'un fonctionnement réversible, un tel système produirait simultanément, pour chaque kg d'ammoniac vaporisé, 330 kilojoules d'énergie mécanique sur l'arbre du moteur et 390 kilojoules d'énergie frigorifique, sous forme d'un fluide frigoporteur à - 30°C.

Revenant à l'exemple illustré, la vaporisation dans la chambre 7 d'amoniac nécessite un apport dechaleur, tandis que la condensation conduisant au mélange dans la chambre 12 du concentrat et du solvant nécessite un retrait de chaleur. Ceci est obtenu simplement du fait que la paroi 15 sur laquelle s'écoule le concentrat constitue une face de la plaque 16 dont l'autre face constitue la paroi 8 sur laquelle s'écoule le solvant. Pour que la chaleur puisse passer d'une chambre à l'autre, un certain gradient thermique est nécessaire. Dans l'exemple illustré, on a supposé que ce gradient était de 6°C, la température moyenne de l'ammoniac s'écoulant sur la paroi 8 étant donc de 17°C, et la température moyenne du concentrat s'écoulant sur la Paroi 15 étant de 23°C. Dans ces conditions, les pressions d'équilibre dans les chambres 7 et 12 s'établissent à 7,6 atmosphères et 1,5 atmosphères respectivement. La différence de pression est mise à profit pour entraîner le moteur 10 qui récupère donc sous forme mécanique l'énergie chimique stockée sous forme du solvant (ammoniac) et du concentrat (30 % d'ammoniac, 70 % d'eau). La puissance est fonction du débit. Le débit maximum autorisé est fonction des possibilités d'évaporation des plaques, c'est-à-dire de leur surface et du gradient thermique autorisé. Le système fonctionne de façon sensiblement isotherme et adiabatique.

On notera qu'en fait la chaleur de condensation-mélange d'une quantité donnée d'ammoniac dans le concentrat est supérieure à la chaleur de vaporisation de la même quantité d'ammoniac. Il s'ensuit que les températures auront tendance à augmenter dans l'appareil, avec comme résultat un accroissement des pressions donc un gain de puissance.

Les calculs montrent qu'avec un gradient thermique entre les faces 15 et 8 de 6°C et dans les conditions de fonctionnement indiquées, on peut raisonnablement obtenir une puissance de 24 à 36 kw/m² de surface.de plaque d'échange telle que 16.

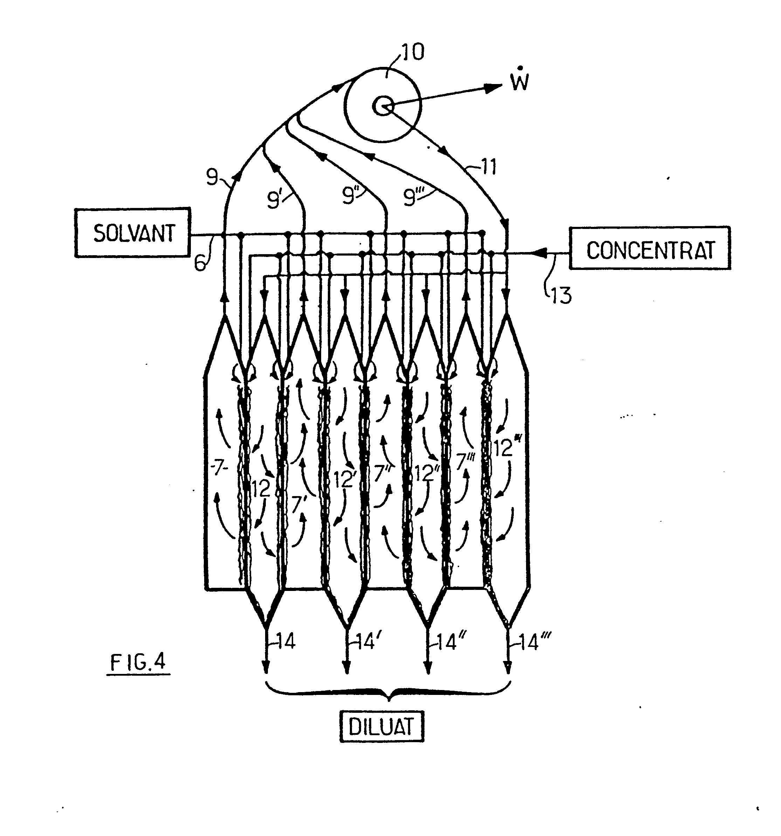

Avantageusement, comme illustré à la figure 4, on utilisera plusieurs chambres accolées et empilées en série telles que 7, 12 pour constituer plusieurs étages en parallèle qui pourront alimenter un même moteur 10.

Pour éviter des redites, les mêmes chiffres ont été utilisés dans la figure 4 et dans la figure 3 pour représenter les éléments semblables, les quatre étages successifs de chambres semblables ayant été repérés respectivement 7, 12; 7', 12'; 7'', 12''; 7''', 12'''.

On notera que chaque chambre intermédiaire, à l'exclusion des chambres extrêmes 7 et 12''', travaille par ses deux faces pour évaporer le solvant et former à partir du concentrat le diluat.

Un tel empilage occupant un volume total de $1m^3$ formé par assemblage de vingt compartiments de chacun 5 cm d'épaisseur et $1m^2$ de surface permettra sans difficulté, dans les conditions de fonctionnement spécifiées à la figure 3, d'alimenter un moteur d'une puissance de 160 kw.

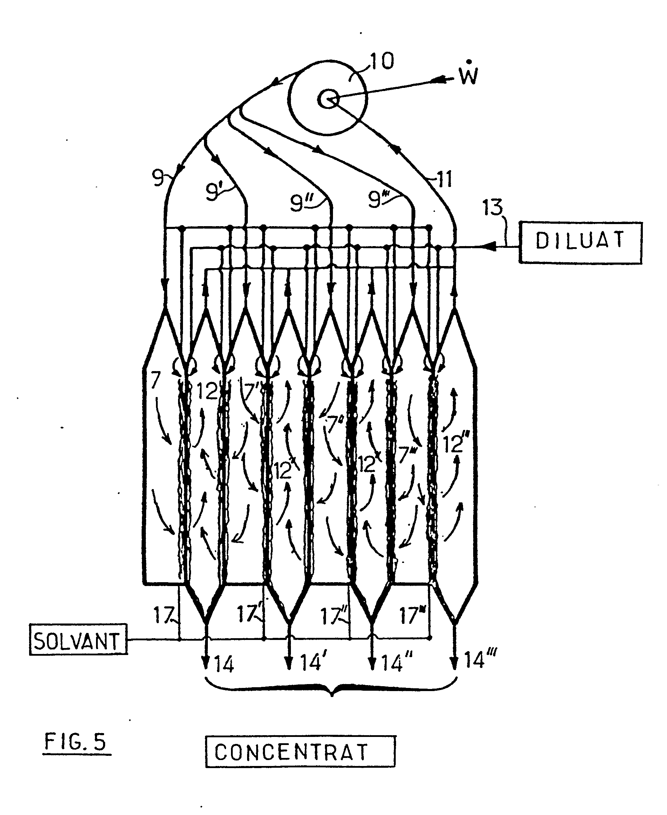

En se reportant maintenant à la figure 5, on voit que la même installation que celle de la figure 4 permet, par simple inversion du fonctionnement du moteur en compresseur et par inversion des circuits d'alimentation de reconstituer à partir des diluats le solvant et le concentrat et de stocker ainsi sous forme chimique l'énergie mécanique w cédée au compresseur 10. La seule différence est qu'on amène en 13 les diluats qui se vaporisent en partie dans les chambres 12, 12', 12'', 12''' pour former une vapeur de solvant (ammoniac) aspirée en 11 et comprimée dans le compresseur 10, et à la base des chambres 12, 12', 12'', 12''', le concentrat (appauvri en solvant ammoniac) qui est recueilli en 14, 14', 14'', 19'''. Le solvant ammoniac comprimé dans le compresseur 10 est amené par les conduits 9, 9', 9'', 9''' aux chambres 7, 7', 7'', 7''' dans lesquelles la vapeur se condense et est recueillie en bas des chambres par les conduites repérées 17, 17', 17'', 17'''.

Bien entendu, l'installation est avantageusement complétée par des réservoirs de stockage des solutions respectives de solvant, de concentrat et de diluat. Ces réservoirs n'ont pas été représentés de façon à ne pas surcharger les dessins.

Il y a lieu de noter la grande souplesse de fonctionnement de l'installation. Ainsi par exemple, la reconstitution du solvant et du concentrat à partir des diluats peut se faire en utilisant tout appareil évaporateur-séparateur ou distillateur classique connu. Eventuellement, ces évaporateurs-séparateurs ou distillateurs peuvent être alimentés par une énergie thermique résiduaire à très faible valeur économique. Eventuellement, des capteurs solaires peuvent être utilisés pour reconstituer des solutions.

Dans tous les cas des stockages suffisants de solvant, concentrat et diluat sont prévus pour assurer l'autonomie pendant le temps désiré de fonctionnement de l'installation avec des concentrations correspondant à des conditions optimisées de fonctionnement notamment des moteurs tels que 10 (figures 4 ou 5).

**Revendications**

1. - Procédé de stockage sous forme chimique d'une énergie mécanique ou thermique et de récupération sous forme mécanique d'une partie au moins de ladite énergie stockée, dans lequel on utilise l'énergie mécanique ou thermique à stocker pour constituer ou régénérer à partir de diluats de solutions réactives fortement non idéales d'un mélange binaire solvant/concentrat, ledit solvant et ledit concentrat et dans lequel, lorsqu'on veut récupérer ensuite ladite énergie, on fait travailler dans un moteur (10) à vapeur tel que machine à piston, à vis, à engrenage ou turbine, la vapeur du solvant qui s'y mélange, avec le concentrat pour former le diluat, caracterise en ce qu'on conduit la réaction de récupération de l'énergie mécanique en mettant en contact thermique direct à travers une simple paroi de séparation le débit de solvant qui se vaporise à une pression donnée avec le débit de concentrat qui se dilue à une pression inférieure à ladite pression donnée.

2. - Dispositif pour la mise en oeuvre du procédé selon la revendication 1, ledit dispositif comportant au moins une alimentation en solvant débouchant dans une chambre d'évaporation (7), au moins une alimentation en concentrat débouchant dans une chambre de dilution (12), au moins une décharge de diluat et au moins un moteur à vapeur relié par son admission à ladite chambre d'évaporation (7) et par son échappement à ladite chambre de dilution (12), ledit dispositif étant caractérisé en ce que la chambre d'évaporation (7) du solvant comprenant une paroi (8) le long de laquelle lors de ladite réaction de récupération de l'énergie mécanique est amené et s'écoule le solvant, la chambre de dilution (12) du concentrat comprenant une paroi (15) le long de laquelle est amené et s'écoule le concentrat, et la paroi (8) de la chambre d'evaporation (7) et la paroi (15) de la chambre de dilution (12) sont en étroit contact thermique d'une avec l'autre.

3. - Dispositif selon la revendication 2, caractérisé en ce que plusieurs chambres associées (7, 7', 7'',... 12, 12', 12''...) d'évaporation du solvant et de dilution du concentrat sont utilisées en parallèle pour faire fonctionner un même moteur (10).

4. - Dispositif selon l'une des revendications 2 ou 3, caractérisé en ce que plusieurs chambres (7, 7'..., 12, 12', 12'',...) sont empilées les unes contre les autres en formant alternativement chambre de vaporisation du solvant et chambre de dilution du contrat.

5. - Dispositif selon l'une des revendications 2 à 4, caractérisé en ce que ledit moteur (10) est réversible, pouvant recomprimer la vapeur de solvant à partir du diluat, ladite paroi (15) recevant, lorsque le moteur fonctionne en compresseur, le diluat à concentrer, et ladite paroi (8) condensant alors sur elle le solvant reformé et récupéré à la base de ladite chambre (7).

6. - Dispositif selon l'une des revendications 2 à 5, caractérisé en ce que des réservoirs de stockage du solvant, du concentrat et des diluats sont utilises.

7. - Dispositif selon l'une des revendications 2 à 6, caractérisé en ce qu'un échangeur de chaleur est intercalé entre le moteur (10) et la chambre de dilution (12) afin de réchauffer le fluide de travail, et par voie de conséquence, refroidir, en dessous de la température ambiante, un fluide auxiliaire, source d'énergie frigorifique utilisable.

## Patentansprüche

1. Verfahren zum Speichern von mechanischer oder thermischer Energie in chemischer Form und zur Wiedergewinnung wenigstens eines Teils dieser gespeicherten Energie in mechanischer Form, bei welchem man die mechanische oder thermische zu speichernde Energie verwendet, um aus Verdünnungen stark reaktiver, nicht idealer Lösungen aus einem binären Lösungsmittel/Konzentrat-Gemisch dieses Lösungsmittel und dieses Konzentrat zu bilden oder rückzugewinnen, und bei dem man, wenn man dann diese Energie wiedergewinnen will, in einem Dampfmotor (10), wie z.B. einer Kolben-, Schrauben-, Getriebe- oder Turbinenmaschine, den Lösungsmitteldampf, der sich dort mit dem Konzentrat zur Bildung der Verdünnung mischt, arbeiten läßt, dadurch gekennzeichnet, daß man die Reaktion der Wiedergewinnung der mechanischen Energie dadurch durchführt, daß man über eine einfache Trennwand den Durchsatz des Lösungsmittels, welches bei einem gegebenen Druck verdampft, in direkten Wärmekontakt mit dem Durchsatz des Konzentrats, das sich bei einem Druck verdünnt, der unter dem gegebenen Druck liegt, bringt.

2. Vorrichtung zur Durchführung des Verfahrens nach Anspruch 1, wobei die Vorrichtung mindestens eine Versorgung an Lösungsmittel, welche in einer Verdampfungskammer (7) mündet, mindestens eine Versorgung an Konzentrat, welche in einer Verdünnungskammer (12) mündet, und mindestens eine Abflußleitung des Verdünnungsmittels und mindestens einen Dampfmotor aufweist, der über seinen Einlaß an die Verdampfungskammer (7) und über seinen Auslaß an der Verdünnungskammer (12) angeschlossen ist, wobei die Vorrichtung dadurch gekennzeichnet ist, daß die Verdampfungskammer (7) des Lösungsmittels eine Wand (8) aufweist, längs welcher während der Reaktion der Wiedergewinnung der mechanischen Energie das Lösungsmittel zugeführt wird und fließt, wobei die Verdünnungskammer (12) des Konzentrats eine Wand (15) aufweist, längs welcher das Konzentrat zugeführt wird und fließt, und wobei die Wand (S) der Verdampfungskammer (7) und die Wand (15) der Verdünnungskammer (12) in eingem Wärmekontakt miteinander stehen.

3. Vorrichtung nach Anspruch 2, dadurch gekennzeichnet, daß mehrere verbundene Kammern (7, 7', 7'', ... 12, 12', 12'' ...) zur Verdampfung des Lösungsmittels und Verdünnung des Konzentrats parallel benutzt werden, um ein und denselben Motor (10) zu betreiben.

4. Vorrichtung nach einem der Ansprüche 2 oder 3, dadurch gekennzeichnet, daß mehrere Kammern (7, 7', ..., 12, 12', 12''...) gegeneinander gestapelt sind, wobei sie wechselweise Kammern für die Verdampfung des Lösungsmittels und Kammern für die Verdünnung des Konzentrates hilden.

5. Vorrichtung nach einem der Ansprüche 2 bis 9, dadurch qekennzeichnet, daß der Motor (10) reversibel ist, wobei er den Dampf des Lösungsmittels, ausgehend von dem Verdünnungsmittel, wieder komprimieren kann, die Wand (15), während der Motor als Kompressor arbeitet, die zu konzentrierende Verdünnung aufnimmt und die Wand (8) auf sich selbst das Lösungsmittel kondensiert, welches am Grund dieser Kammer (7) neu gebildet und wiedergewonnen ist.

6. Vorrichtung nach einem der Ansprüche 2 bis 5, dadurch gekennzeichnet, daß Speicherbehälter für das Lösungsmittel, das Konzentrat und die Verdünnungen benutzt werden.

7. Vorrichtung nach einem der Ansprüche 2 bis 6, dadurch gekennzeichnet, daß zwischen dem Motor (10) und der Verdünnungskammer (12) ein Wärmetauscher zwischengeschaltet ist, um das Arbeitsfließmittel wieder zu erwärmen und folglich ein Hilfsfließmittel als kälteerzeugende, brauchbare Energiequelle unter die Umgebungstempcratur ahzukühlen.

## Claims

A method of storing in chemical form a mechanical on thermal energy and of recovering at least a part of the said stored energy in mechanical form, in which the mechanical or thermal energy to be stored is used to constitute or regenerate from diluates of by no means ideal reagent solutions of e binary solvent/concentrate mixture, the said solvent and the said concentrate and wherein, when it is then desired to recover the said energy, a steam engine (10) such as a piston, worm, gear or turbine engine, is used to work the solvent vapour which becomes mixed with the concentrate to form the diluate, characterised in that the mechanical energy recovery reaction is carried out by bringing into direct thermal contact through a simple separating wall the rate of flow of solvent which evaporates at e given pressure and the rate of flow of concentrate which dilutes at a pressure below the said given pressure.

2. An apparatus for carrying out the method according to Claim 1, the said apparatus comprising at least one supply of solvent discharging into an evaporation chamber (7), at least one supply of concentrate discharging into a dilution chamber (12), at least one diluate discharge and at least one steam engine connected by its intake to the said evaporation chamber (7) and by its exhaust to the said dilution chamber (12), the said apparatus being characterised in that the solvent evaporation chamber (7) comprises a wall (8) along which the solvent flows during the mechanical energy recovery reaction, the concentrate dilution chamber (12) comprising a wall (15) along which the concentrate flows, and the wall (8) of the evaporation chember (17) end the wall (15) of the dilution chamber (12) are in close thermal contact with each other.

3. Apparatus according to Claim 2, characterised in that a plurality of associated solvent evaporation and concentrate dilution chambers (7, 7', 7'', ... 12, 12', 12''...) are used in parallel to make one and the same engine (10) operate.

4. Apparatus according to one of Claims 2 or 3, characterised in that a plurality of chambers (7, 7'. .., 12, 12', 12'', ...) are stacked one against another to form alternating solvent evaporation chambers and concentrate dilution chambers.

5. Apparatus according to one of Claims 2 to 4, characterised in that the said engine (10) is reversible, being capable of recompressing the solvent vapour from the diluate, so that when the engine is functioning as a compressor, the said wall (15) receives the diluate which is to be concentrated, the said wall (8) then condensing on it the re-formed solvent recovered at the base of the said chamber (7).

6. Apparatus according to one of Claims 2 to 5, characterised in that tanks are used for storing the solvent, the concentrate and the diluates.

7. Apparatus according to one of Claims 2 to 6, characterised in that a heat exchanger is incorporated between the engine (10) and the dilution chamber (12) in order to reheat the working fluid and consequently to cool below the ambient temperature an auxiliary fluid which can be used as a source of coolant energy.

FIG. 1

FIG. 2

SOLVANT ≃ PUR
à 20°C : NH₃ }

{ CONCENTRAT à 20°C
(NH₃ 30% + H₂O 70%)

FIG.3

DILUAT à ≈ 20°C
NH₃ : 40% + H₂O 60%

FIG.4

FIG. 5

CONCENTRAT

DILUAT

SOLVANT